# EUROPÄISCHE PATENTSCHRIFT

(11) **EP 1 306 568 B1**
(45) Veröffentlichungstag und Bekanntmachung des Hinweises auf die Patenterteilung: **16.11.2005**
(21) Anmeldenummer: 02020786.6
(22) Anmeldetag: 17.09.2002
(51) Int. Cl.: F16C 29/08, B23K 20/227

(54) **Anordnung eines Abdeckbandes an einer Linearführung**
Mounting of a cover strip in a linear bearing
Montage d'une bande de recouvrement dans un palier linéaire

(30) Priorität: 26.10.2001 DE 10153016
(43) Veröffentlichungstag der Anmeldung: 02.05.2003
(73) Patentinhaber: INA-Schaeffler KG, 91074 Herzogenaurach (DE)
(72) Erfinder: Schmidt, Roland, 66292 Riegelsberg (DE)

(56) Entgegenhaltungen:
- EP-A- 0 731 283
- EP-A- 1 184 584
- WO-A-00/39472
- DE-A- 3 900 171
- DE-A- 4 317 819
- DE-A- 19 524 810
- DE-A- 19 953 462
- US-A- 2 827 809

## Beschreibung

### Gebiet der Erfindung

Die Erfindung betrifft eine Anordnung eines Abdeckbandes an einer Linearführung zum Verschließen von Bohrungen für Befestigungsschrauben einer Führungsschiene, wobei das Abdeckband in einer Längsnut der Führungsschiene eingesteckt und mit seiner bezüglich der Führungsschiene äußeren Oberfläche in der Ebene einer Abstreiffläche der Führungsschiene angeordnet ist und zwei sich in Längsrichtung der Führungsschiene erstreckende Halteleisten für die Befestigung aufweist, die innerhalb der Längsnut an den die Längsnut begrenzenden seitlichen Nutwänden der Führungsschiene anliegend angeordnet sind, wobei das Abdeckband aus einer als Decklage wirkenden äußeren Schicht und einer als Verformungslage wirkenden inneren Schicht zusammengesetzt ist und die innere Schicht die Halteleisten enthält sowie im übrigen an der äußeren Schicht anliegend befestigt ist.

Abdeckbänder werden bei linearen Lagerungen eingesetzt, bei welchen Wälzkörperumlaufeinheiten auf Profilschienen geführt sind. Solche Führungsschienen werden an Werkzeugmaschinen verwendet und müssen als Verschleißteile von Zeit zu Zeit ausgewechselt werden. Daher sind sie häufig mit Schrauben am Maschinengestell befestigt. Der Verwendungszweck des Abdeckbandes besteht darin, die Bohrungen in den Profilschienen von Linearführungen plan abzudecken. Mit dem Abdeckband ergibt sich eine erhebliche Vereinfachung und Beschleunigung der Schienenmontage. Das Verschließen jeder einzelnen Bohrung entfällt.

Zum Verschließen der Bohrungen einer Führungsschiene für die Befestigungsschrauben ist es bekannt, die Führungsschiene in der Fluchtungslinie der Befestigungsbohrungen mit einer nutförmigen Aussparung zu versehen, in welche das Abdeckband passend eingesetzt wird. Solche Anordnungen zeigen beispielsweise die Druckschriften DD 237 805 A1 und EP 0 311 895 A1. Das Abdeckband wird häufig innerhalb der nutförmigen Aussparung an der Führungsschiene angeklebt. Dabei besteht aber die Gefahr, daß sich die Klebung löst. Die Klebe-Kontaktfläche muß dann für die erneute Montage eines Abdeckbandes gereinigt werden. Die Klebetechnik des Abdeckbandes wird mittlerweile im allgemeinen Maschinenbau und im Werkzeugmaschinenbau immer weniger akzeptiert, weil sich das Abdeckband bei vielen Anwendern unter der Einwirkung von Emulsionen oftmals löst und somit die Art dieser Verbindung reklamiert wird.

Die Druckschrift DE 195 24 810 A1 zeigt eine Anordnung der eingangs genannten Art, bei welcher das Abdeckband aus einer oberen Schicht und einer daran befestigten unteren Schicht besteht, wobei die beiden Halteleisten von Bereichen gebildet werden, die an den beiden Längsseiten der unteren Schicht abgebogen sind. Über die Art der Befestigung der beiden Schichten aneinander ist dieser Druckschrift ein Hinweis nicht zu entnehmen. Jedoch bietet sich hierfür beispielsweise die Klebetechnik an. Die obere Schicht des Abdeckbandes liegt innerhalb der Längsnut an seitlichen Anlageflächen der Führungsschiene an, die durch Fräsen von Stegen, deren Schrägstellen mit Druckwalzen und anschließendes Schleifen entstanden sind, so daß sich dafür eine aufwendige Herstellung ergibt. Außerdem fehlt diesem Abdeckband in seinem mittleren Bereich innerhalb der Längsnut eine Abstützmöglichkeit an der Führungsschiene. Damit besteht die Gefahr, daß das Abdeckband sich verbiegt und auswölbt, wodurch die Verklebung seiner Schichten und die Abdichtung an seiner äußeren Oberfläche beeinträchtigt werden kann.

### Zusammenfassung der Erfindung

Der Erfindung liegt die Aufgabe zugrunde, ein Abdeckband zu entwickeln, das primär durch seine Formgebung im Verbund mit einer entsprechend gestalteten Schienennut formschlüssig und sicher in der Schienennut gehalten wird.

Diese Aufgabe wird erfindungsgemäß dadurch gelöst, daß die äußere Schicht und die innere Schicht des Abdeckbandes aus zwei unterschiedlichen Materialien bestehen, die mit Hilfe der Technologie des Kaltwalzplattierens mechanisch untrennbar miteinander verbunden sind.

Dabei kann die äußere Schicht aus einem korrosionsbeständigen Stahl und die innere Schicht aus Rein-Aluminium bestehen. Jede seitliche Nutwand der Führungsschiene kann eine im Querschnitt konkave Hinterschneidung zur Aufnahme von Werkstoff der inneren Schicht aufweisen.

Die beiden Längsränder der inneren Schicht können als Metallippen ausgebildet sein. Das Abdeckband wird in die Längsnut der Führungsschiene teilweise eingesetzt und kann anschließend vollständig eingerollt werden, wobei die Materiallippen der inneren Schicht in die Hinterschneidungen der Führungsschiene hinein verlagert und zu Halteleisten umgeformt werden. Es ist aber auch möglich, daß das Abdeckband in die Längsnut der Führungsschiene vollständig eingeschnappt wird, wobei die beiden Längsränder der inneren Schicht als Halteleisten mit Auswölbungen ausgebildet sind, die als federnde Schnapplippen wirkend in den Hinterschneidungen der Führungsschiene angeordnet sind.

Das erfindungsgemäße Abdeckband besteht somit aus zwei unterschiedlichen Materialien, beispielsweise Stahl und Aluminium, die mit Hilfe der Technologie des Kaltwalzplattierens mechanisch untrennbar verbunden werden. Dieser Stahl-Aluminium-Verbund bleibt wegen seine Homogenität auch bei extremer Umformung erhalten. Eine dem Kaltwalzplattieren nachgeschaltete Wärmebehandlung (Weichglühen) macht es möglich, aufgrund der sich nicht überdekkenden Temperaturbereiche bei der Wärmebehandlung von Stahl und Aluminium gezielt auf die Werkstoffgüte des Aluminiums einzuwirken, ohne die durch die Kaltverfestigung erzielte und gewünschte Festigkeit der als Decklage wirkenden äußeren Schicht zu vermindern.

Für die Decklage kann der korrosionsbeständige Stahl X-10CrNi18-8 mit hoher Festigkeit verwendet werden. Der Werkstoff für die als Verformungslage wirkende innere Schicht kann ein Rein-Aluminium sein. Eine solche Schicht wird in weichem Zustand verwendet, wenn in deren Querschnitt beidseitig in Längsrichtung des Abdeckbandes eine Einrollprofilierung spanlos eingeformt wird. Bei dieser Variante wird das Abdeckband in die mit einem Hinterschnitt versehene Längsnut der Führungsschiene eingelegt und mit einem speziellen Einrollwerkzeug in die Führungsschiene eingerollt. Hierbei kommt es durch den Überstand der Materiallippe beim Einrollen jeweils zu Lastspitzen, die die Materiallippe dann zwangsweise nach außen in den Nuthinterschnitt greifen lassen.

Die innere Schicht aus Rein-Aluminium ist dagegen in hartem Zustand, wenn in deren Querschnitt beiseitig in Längsrichtung des Abdeckbandes eine Schnappprofilierung eingewalzt ist. Dann wird durch diese spezielle Profilierung ohne Hilfsmittel das Einschnappen des Abdeckbandes in die Längsnut der Führungsschiene erreicht. Die Profilierung im Abdeckband ist so gestaltet, daß eine frei herausgeformte Schnapplippe sich jeweils quer zur Längsrichtung des Abdeckbandes bewegen kann. Diese greift dann in den Hinterschnitt der Schienennut.

Das erfindungsgemäße Abdeckband wird durch Formschluß sicher in der Führungsschiene gehalten. Es ermöglicht eine kostengünstige Herstellung, ist durch einfache und relativ schmale Bandquerschnitte aufrollbar und durch die Verwendung von X-Stahl (Chrom-Nickel-Stahl) und Aluminium korrosionsbeständig.

Mit der Technologie des Kaltwalzplattierens sind auch andere Werkstoffkombinationen möglich, wie z. B. Stahl und Kupfer. Generell kann Stahl mit Werkstoffen kombiniert werden, die sich in ihrer Fließspannung von Stahl deutlich unterscheiden.

### Kurze Beschreibung der Zeichnung

Ausführungsbeispiele der Erfindung sind in der Zeichnung dargestellt und werden im folgenden näher beschrieben. Es zeigen:
- Figur 1: eine Draufsicht auf ein Abdeckband;
- Figur 2: einen Querschnitt durch das Abdeckband gemäß Linie II-II der Figur 1, welches in eine Führungsschiene teilweise eingesetzt ist;
- Figur 3: einen Figur 2 entsprechenden Teilquerschnitt durch ein weiteres Abdeckband.

### Ausführliche Beschreibung der Zeichnung

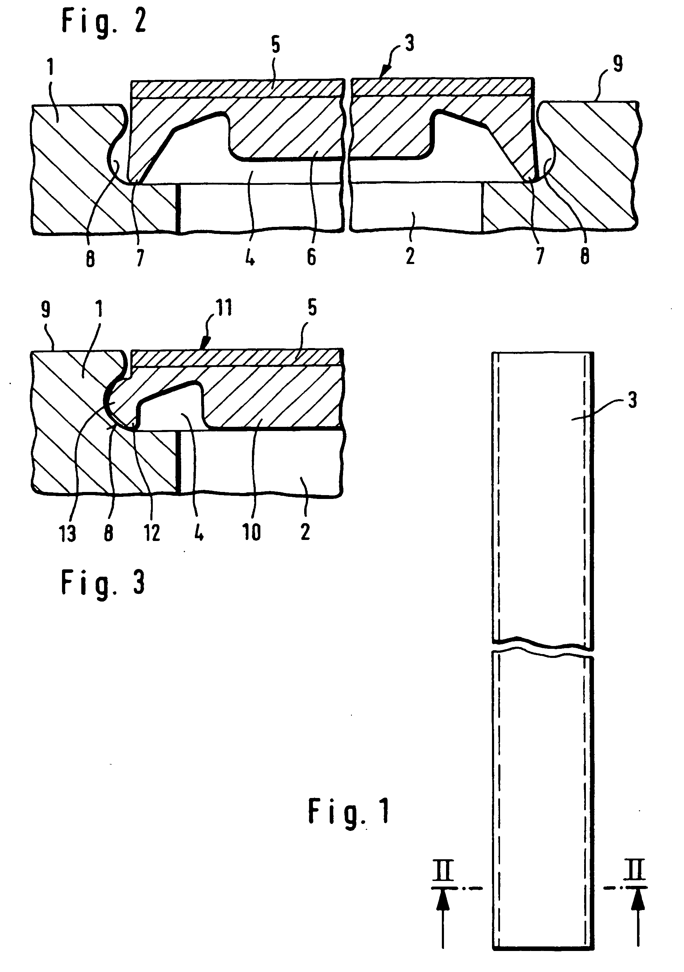

Eine erfindungsgemäße Anordnung weist eine Führungsschiene 1 mit mehreren in Längsrichtung der Schiene hintereinander angeordneten Bohrungen 2 für Befestigungsschrauben auf. Diese sind durch ein gemeinsames Abdeckband nach außen verschlossen. Das in den Figuren 1 und 2 dargestellte Abdeckband 3 ist in einer Längsnut 4 der Führungsschiene 1 eingesetzt. Es besteht aus einer äußeren Schicht 5 und einer inneren Schicht 6. An den beiden Längsseiten der inneren Schicht 6 sind auf den Boden der Längsnut 4 gerichtete Materiallippen 7 ausgebildet. Die untere Schicht 6 liegt an der oberen Schicht 5 des Abdeckbandes 3 an, wobei die beiden Schichten durch Kaltwalzplattieren aneinander befestigt sind.

An den beiden inneren Längsseiten der Führungsschiene 1, welche die Längsnut 4 begrenzen, sind konkave Hinterschneidungen 8 ausgebildet. In diese werden die Materiallippen 7 unter Umformung hineingedrückt, wenn das Abdeckband 3, welches teilweise in die Längsnut 4 eingesetzt ist, durch Einrollen vollständig innerhalb der Längsnut 4 angeordnet wird. In diesem Zustand wird das Abdeckband 3 durch Formschluß in den Bereichen der Hintersehneidungen 8 in der Führungsschiene 1 gehalten. Die äußere Oberfläche des Abdeckbandes 3 liegt nun in der Ebene einer oberen Abstreiffläche 9 der Führungsschiene 1.

Das in Figur 3 dargestellte Ausführungsbeispiel unterscheidet sich von dem Abdeckband 3 nach Figur 2 nur dadurch, daß die innere Schicht 10 des Abdeckbandes 11 zwei an ihren Längsseiten ausgebildete Halteleisten 12 aufweist, die mit konvexen Auswölbungen 13 in den Bereichen der Hinterschneidungen 8 innerhalb der Längsnut 4 an der Führungsschiene 1 formschlüssig anliegen.

### Bezugszahlenliste

- 1: Führungsschiene
- 2: Bohrung
- 3: Abdeckband
- 4: Längsnut
- 5: äußere Schicht
- 6: innere Schicht
- 7: Materiallippe
- 8: Hinterschneidung
- 9: Abstreiffläche
- 10: innere Schicht
- 11: Abdeckband
- 12: Halteleiste
- 13: Auswölbung

## Patentansprüche

1. Anordnung eines Abdeckbandes (3, 11) an einer Linearführung, zum Verschließen von Bohrungen (2) für Befestigungsschrauben einer Führungsschiene (1), wobei das Abdeckband (3, 11) in einer Längsnut (4) der Führungsschiene (1) eingesteckt und mit seiner bezüglich der Führungsschiene (1) äußeren Oberfläche in der Ebene einer Abstreiffläche (9) der Führungsschiene (1) angeordnet ist und zwei sich in Längsrichtung der Führungsschiene (1) erstreckende Halteleisten für die Befestigung aufweist, die innerhalb der Längsnut (4) an den die Längsnut (4) begrenzenden seitlichen Nutwänden der Führungsschiene (1) anliegend angeordnet sind, wobei das Abdeckband (3, 11) aus einer als Decklage wirkenden äußeren Schicht (5) und einer als Verformungslage wirkenden inneren Schicht (6, 10) zusammengesetzt ist und die innere Schicht (6, 10) die Halteleisten enthält sowie im übrigen an der äußeren Schicht anliegend befestigt ist, **dadurch gekennzeichnet, dass** die äußere Schicht (5) und die innere Schicht (6, 10) des Abdeckbandes (3, 11) aus zwei unterschiedlichen Materialien bestehen, die mit Hilfe der Technologie des Kaltwalzplattierens mechanisch untrennbar miteinander verbunden sind.

2. Anordnung nach Anspruch 1, **dadurch gekennzeichnet, dass** die äußere Schicht (5) aus einem korrosionsbeständigen Stahl besteht.

3. Anordnung nach Anspruch 2, **dadurch gekennzeichnet, dass** die innere Schicht (6, 10) aus einem Werkstoff besteht, der eine geringere Fließspannung aufweist, als die aus Stahl bestehende äußere Schicht (5).

4. Anordnung nach Anspruch 1, **dadurch gekennzeichnet, dass** jede seitliche Nutwand der Führungsschiene (1) eine im Querschnitt konkave Hinterschneidung (8) zur Aufnahme von Werkstoff der inneren Schicht (6, 10) aufweist.

5. Anordnung nach Anspruch 4, **dadurch gekennzeichnet, dass** die beiden Längsränder der inneren Schicht (6, 10) als Materiallippen (7) ausgebildet sind.

6. Anordnung nach Anspruch 5, **dadurch gekennzeichnet, dass** das Abdeckband (3) in die Längsnut (4) der Führungsschiene (1) teilweise eingesetzt und anschließend vollständig eingerollt ist, wobei die Materiallippen (7) der inneren Schicht (6) in die Hinterschneidungen (8) der Führungsschiene (1) hinein verlagert und zu Halteleisten umgeformt sind.

7. Anordnung nach Anspruch 4, **dadurch gekennzeichnet, dass** Abdeckband (11) in die Längsnut (4) der Führungsschiene (1) vollständig eingeschnappt ist, wobei die beiden Längsränder der inneren Schicht (10) als Halteleisten (12) mit konvexen Auswölbungen (13) ausgebildet sind, die als federnde Schnapplippen wirkend in den Hinterschneidungen (8) der Führungsschiene (1) angeordnet sind.

8. Anordnung nach Anspruch 1, **dadurch gekennzeichnet, dass** die innere Schicht (6, 10) aus Rein-Aluminium besteht.

## Claims

1. Arrangement of a cover band (3, 11) on a linear guide for closing holes (2) for fastening screws of a guide rail (1), the cover band (3, 11) being inserted in a longitudinal groove (4) of the guide rail (1) and, with its outer surface relative to the guide rail (1), being arranged in the plane of a wiping surface (9) of the guide rail (1) and having two retaining strips for the fastening, these retaining strips extending in the longitudinal direction of the guide rail (1) and being arranged so as to bear inside the longitudinal groove (4) against those lateral groove walls of the guide rail (1) which define the longitudinal groove (4), the cover band (3, 11) being composed of an outer layer (5) acting as facing layer and of an inner layer (6, 10) acting as deformation layer, and the inner layer (6, 10) containing the retaining strips and otherwise being fastened so as to bear against the outer layer, **characterized in that** the outer layer (5) and the inner layer (6, 10) of the cover band (3, 11) are made of two different materials which are inseparably connected to one another mechanically by means of the technology of cold roll bonding.

2. Arrangement according to Claim 1, **characterized in that** the outer layer (5) is made of corrosion-resistant steel.

3. Arrangement according to Claim 2, **characterized in that** the inner layer (6, 10) is made of a material which has a lower yield stress than the outer layer (5) made of steel.

4. Arrangement according to Claim 1, **characterized in that** each lateral groove wall of the guide rail (1) has an undercut (8) of concave cross section for accommodating material of the inner layer (6, 10).

5. Arrangement according to Claim 4, **characterized in that** the two longitudinal margins of the inner layer (6, 10) are designed as material lips (7).

6. Arrangement according to Claim 5, **characterized in that** the cover band (3) is partly inserted into the longitudinal groove (4) of the guide rail (1) and is then completely rolled into place, the material lips (7) of the inner layer (6) being displaced into the undercuts (8) of the guide rail (1) and being shaped into retaining strips.

7. Arrangement according to Claim 4, **characterized in that** the cover band (11) is snapped completely into the longitudinal groove (4) of the guide rail (1), the two longitudinal margins of the inner layer (10) being designed as retaining strips (12) having convexly arched portions (13) which are arranged in the undercuts (8) of the guide rail (1) such as to act as flexible snap lips.

8. Arrangement according to Claim 1, **characterized in that** the inner layer (6, 10) is made of pure aluminium.

## Revendications

1. Montage d'une bande de recouvrement (3, 11) dans un palier linéaire, pour la fermeture d'alésages (2) pour vis de fixation d'un rail de guidage (1), dans lequel la bande de recouvrement (3, 11) est enfoncée dans une rainure longitudinale (4) du rail de guidage (1) et est disposée avec sa surface extérieure par rapport au rail de guidage (1) dans le plan d'une surface de grattage (9) du rail de guidage (1) et présente deux nervures de fixation s'étendant dans la direction longitudinale du rail de guidage (1) en vue de la fixation, lesquelles sont disposées à l'intérieur de la rainure longitudinale (4) en applique contre les parois latérales de rainure du rail de guidage (1) délimitant la rainure longitudinale (4), la bande de recouvrement (3, 11) se composant d'une couche extérieure (5) servant de couche de recouvrement et d'une couche intérieure (6, 10) servant de couche de déformation, et la couche intérieure (6, 10) contenant les nervures de fixation et étant par ailleurs fixée en applique contre la couche extérieure, **caractérisé en ce que** la couche extérieure (5) et la couche intérieure (6, 10) de la bande de recouvrement (3, 11) sont constituées de deux matériaux différents qui sont connectés l'un à l'autre mécaniquement de manière inséparable à l'aide de la technologie de placage par laminage à froid.

2. Montage selon la revendication 1, **caractérisé en ce que** la couche extérieure (5) se compose d'un acier résistant à la corrosion.

3. Montage selon la revendication 2, **caractérisé en ce que** la couche intérieure (6, 10) se compose d'un matériau qui présente une contrainte d'écoulement inférieure à celle de la couche extérieure (5) en acier.

4. Montage selon la revendication 1, **caractérisé en ce que** chaque paroi latérale de rainure du rail de guidage (1) présente une contre-dépouille (8) de section transversale concave pour recevoir le matériau de la couche intérieure (6, 10).

5. Montage selon la revendication 4, **caractérisé en ce que** les deux bords longitudinaux de la couche intérieure (6, 10) sont réalisés en tant que lèvres de matériau (7).

6. Montage selon la revendication 5, **caractérisé en ce que** la bande de recouvrement (3) est insérée partiellement dans la rainure longitudinale (4) du rail de guidage (1) et est ensuite complètement laminée à l'intérieur, les lèvres de matériau (7) de la couche intérieure (6) étant décalées dans les contre-dépouilles (8) du rail de guidage (1) et étant déformées pour fournir les nervures de fixation.

7. Montage selon la revendication 4, **caractérisé en ce que** la bande de recouvrement (11) est complètement encliquetée dans la rainure longitudinale (4) du rail de guidage (1), les deux bords longitudinaux de la couche intérieure (10) étant réalisés sous forme de nervures de fixation (12) avec des renflements convexes (13), qui sont disposés dans les contre-dépouilles (8) du rail de guidage (1) pour servir de lèvres d'encliquetage élastiques.

8. Montage selon la revendication 1, **caractérisé en ce que** la couche intérieure (6, 10) se compose d'aluminium pur.
